# FASCICULE DE BREVET EUROPEEN

(11) **EP 3 520 934 B1**
(45) Date de publication et mention de la délivrance du brevet: **27.04.2022**
(21) Numéro de dépôt: 19155814.7
(22) Date de dépôt: 06.02.2019
(51) Int. Cl.: B23B 3/26

(54) **PORTE-OUTIL, ET MACHINE DE TOURNAGE INVERSÉ AVEC UN TEL PORTE-OUTIL**
WERKZEUGHALTER UND UMGEKEHRT DREHENDE MASCHINE MIT EINEM SOLCHEN WERKZEUGHALTER
TOOL HOLDER, AND REVERSE TURNING MACHINE WITH SUCH A TOOL HOLDER

(30) Priorité: 06.02.2018 CH 1342018
(43) Date de publication de la demande: 07.08.2019
(73) Titulaire: Ventura Mecanics SA, 2014 Bôle (CH)
(72) Inventeur: Glanzmann, Dimitri, 2016 Cortaillod (CH)
(74) Mandataire: P&TS SA (AG, Ltd.)

(56) Documents cités:
- CH-A- 327 038
- DE-A1- 19 949 065
- DE-U1- 8 915 600
- FR-A- 1 072 067
- FR-A- 1 578 355
- US-A- 5 207 136

## Description

### Domaine technique

La présente invention concerne une machine de tournage inversé pour le tournage d'une pièce au moyen d'outils tournant autour de la pièce, ainsi qu'un porte-outils selon le préambule de la revendication 1. DE 199 49 065 A1 montre un exemple d'un tel porte-outils.

### Etat de la technique

Les décolleteuses habituelles comportent une barre tournant au moyen d'une poupée, et plusieurs outils fixes en rotation. Les outils peuvent se déplacer radialement indépendamment les uns des autres afin d'usiner la périphérie de cette barre.

On connaît par ailleurs des décolleteuses à tournage inversé, dans lesquelles la matière usinée ne tourne pas, contrairement aux tours usuels. Au lieu de cela, les outils, par exemple, les burins, sont montés sur un mandrin porte-outil qui tourne autour de la barre de matériau à usiner qui reste fixe en rotation. Il est ainsi possible de charger la machine à partir d'une torche de fil métallique souple ce qui évite les pertes de temps pour la recharge des barres et réduit les chutes de matière. Le fil doit être suffisamment fin pour pouvoir être dressé avant de passer dans le canon de guidage.

A titre d'exemple, les décolleteuses automatiques de type Escomatic D2, D4, D5 et D6 (ensemble : Escomatic DX) constituent une famille de décolleteuses à tournage inversé fabriquées depuis plusieurs décennies par la société Esco SA. Les décolleteuses Escomatic D2, D4, D5 ont deux outils de coupe, tandis que les Escomatic D6 ont 3 outils. La construction générale de ces machines est décrite dans la demande CH327038 au nom de ESCO SA.

Le principe d'une telle décolleteuse est aussi illustré dans le brevet français FR1578355. Les décolleteuses Escomatic sont en particulier adaptées au micro-décolletage de pièces de petit diamètre usinées à partir d'un fil suffisamment fin pour être redressé depuis sa position enroulée en torche

La plupart des décolleteuses automatiques Escomatic DX en usage sont des décolleteuses dont les déplacements sont commandés par des cames. Le déplacement des burins est typiquement commandé par des cames entraînées par une boite à vitesses.

Les utilisateurs de ces décolleteuses manifestent souvent le désir de les remplacer par des machines à commande numériques qui offrent une plus grande souplesse de configuration et sont par exemple mieux adaptées à la fabrication de petites séries. A cet effet, différentes sociétés proposent de remplacer les systèmes de commande à came par des groupes de commande basés sur un ou des servomoteurs contrôlés par une commande numérique.

Un des problèmes à résoudre pour une telle opération de rétrofittage est d'affecter les moteurs aux différents axes à contrôler. Les décolleteuses automatiques de type Escomatic DX comportent un premier axe pour contrôler la position longitudinale de la barre, et un deuxième axe pour contrôler la position de deux outils d'usinage en plongée.

La demande internationale WO2009/000094A1 au nom de Esco SA décrit une machine de décolletage munie de deux actuateurs à commande numérique. Un premier actuateur permet de contrôler l'avance de matière au cours du décolletage. Le deuxième actuateur commande la plongée des outils de décolletage et de coupe.

La demande internationale WO2015124222 décrit un procédé de rétrofittage adapté aux décolleteuses automatiques de type Escomatic DX, dans lequel les deux axes d'une décolleteuse Escomatic DX sont contrôlés au moyen de deux servomoteurs, l'un pour l'avance de la matière et le deuxième pour le contrôle de la plongée de tous les outils.

L'utilisation d'un nombre réduit de servomoteurs permet de réduire les coûts et d'augmenter la fiabilité. La profondeur de plongée des outils (c'est-à-dire leur position radiale) ne peut cependant pas être contrôlée indépendamment, ce qui rend la fabrication de certaines pièces impossible.

Par ailleurs, ces solutions permettent uniquement un usinage avec deux outils. La fabrication de certaines pièces requiert cependant un nombre d'outils plus important, par exemple quatre outils distincts. La fabrication de certaines pièces requiert en outre un déplacement indépendant des différents outils.

EP2361173 B1 décrit une machine d'usinage comprenant deux outils rotatifs entraînés par un moteur situé sur un châssis fixe. Dans un mode de réalisation particulier, il est prévu un moteur électrique embarqué propre à chaque outil, pour ajuster le positionnement des outils indépendamment l'un de l'autre. Ce document précise qu' « on veillera alors à ne pas créer de déséquilibrage trop important de la machine, en limitant la vitesse de rotation du support d'outils autour de la barre usinée.». Cette solution est donc uniquement adaptée à l'usinage de pièces pouvant être usinées à basse vitesse, par exemple de pièces en bois; elle ne convient pas à l'usinage de pièces métalliques de précision, car le poids des moteurs en rotation provoquerait des balourds qui déséquilibreraient la machine.

US2010/0162861 décrit une autre machine permettant de peler des pièces cylindriques au moyen de quatre moteurs montés sur un anneau tournant autour de la pièce. Il a été constaté dans le cadre de l'invention que la masse des moteurs en rotation crée une inertie importante qui limite l'accélération maximale, et risque en outre de créer un balourd qui s'oppose à un mouvement rigoureusement circulaire des outils autour de la pièce.

US2009301274A décrit une machine d'usinage de pièces tubulaires par enlèvement de copeaux au moyen de fraises entrainées par des moteurs électriques sur un support d'outils rotatif. Cette solution emploie plusieurs degrés de liberté pour chaque outil tournant. Le déséquilibre occasionné par le poids des moteurs embarqués s'oppose à un usinage concentrique précis.

US1943649A décrit une machine pour la fabrication de poteaux en bois à l'aide de moteurs tournants autour du poteau. Cette solution est uniquement adaptée à la fabrication de pièces en bois pour lesquelles une relativement faible précision est requise.

### Bref résumé de l'invention

Il a été constaté dans le cadre de cette invention que la précision qui peut être obtenue à l'aide de ces solutions est limitée, notamment dans le cas de matériaux à usiner durs pour lesquels une haute vitesse d'usinage est favorable.

Un but de la présente invention est de proposer une architecture de machiner adaptée à l'usinage de pièces en matériaux durs, par exemple en métal, notamment en laiton, en acier, en titane, etc.

Un but est aussi de de proposer une architecture de machiner adaptée à l'usinage de pièces avec une haute précision, de préférence une précision meilleure que 10 microns, par exemple meilleure que 3 microns, typiquement de l'ordre du micron.

Un des buts de la présente invention est aussi de proposer une machine de tournage inversé plus flexible.

Il a été constaté dans le cadre de la présente invention que la disposition excentrée de plusieurs moteurs sur un plateau tournant autour de la pièce à usiner crée un moment d'inertie important qui limite l'accélération et la décélération maximale pouvant être atteintes, et donc la flexibilité de la machine. En outre, les composants de moteurs excentrés doivent être rigides et donc massifs pour résister à la force centrifuge importante provoquée par la vitesse de rotation élevée.

Il a aussi été constaté que cette disposition crée des balourds, notamment si les moteurs ne sont pas disposés de manière rigoureusement symétrique autour de l'axe de rotation longitudinal du plateau, ou si leur masse n'est pas identique. A haute vitesse, ces balourds provoquent une rotation non circulaire des outils sur le plateau, et donc un usinage non parfaitement concentrique.

Il a encore été constaté que cette disposition radiale des moteurs autour de la pièce à usiner limite le nombre de moteurs qui peuvent être prévus, et donc le nombre d'outils possibles.

Afin de résoudre ce problème, la présente invention propose un porte-outils pour le tournage de matière ayant les caractéristiques définies dans la revendication 1.

Cette disposition permet d'aligner le ou les moteurs coaxialement avec la matière à usiner. On évite ainsi les problèmes de moment d'inertie et de balourds occasionnés par des moteurs décentrés.

Le ou chacun des différents moteurs a avantageusement un rotor avec une axe de rotation qui coïncide avec l'axe de symétrie de la barre à usiner.

Le centre de masse du ou de chaque moteur se trouve ainsi de préférence sur l'axe de symétrie de la pièce à usiner.

Le porte-outils intègrent plusieurs moteurs pour contrôler indépendamment les profondeurs de plongée respectives de plusieurs outils.

Ces différents moteurs peuvent être disposés coaxialement.

Les différents moteurs peuvent être tous identiques.

Le porte-outils peut comporter un plateau. Les moteurs sont disposés d'un côté du plateau, tandis que chaque outil est monté pivotant de l'autre côté du plateau selon un axe de rotation parallèle à l'axe longitudinal de la matière.

Chaque outil peut être monté pivotant selon un axe de rotation parallèle à l'axe longitudinal de la matière. Les axes de rotation des différents outils sont de préférence répartis angulairement de manière uniforme autour dudit axe longitudinal, de manière à répartir les masses de manière uniforme.

L'arbre de chaque moteur peut engrener avec un axe de rotation d'un outil.

A cet effet, un engrenage est de préférence prévu entre chaque arbre et chaque axe de rotation d'un outil, de manière à ce que la rotation d'un arbre d'une distance angulaire donnée provoque la rotation d'un arbre d'une distance angulaire moindre.

Les axes de rotation des différents outils ont de préférence tous substantiellement la même longueur, de manière à répartir les masses de manière uniforme autour de l'axe longitudinal de la matière.

Chaque moteur peut engrener d'une part avec une roue montée solidaire sur un axe de rotation d'un outil, et d'autre part avec une roue montée folle sur un autre axe de rotation d'un outil, de manière à répartir les masses de manière uniforme autour de l'axe longitudinal de la matière.

Le porte-outils peut comporter une électronique de commande de chaque moteur embarquée dans le porte-outils.

Cette électronique de commande peut inclure des commutateurs de puissance et une électronique de contrôle desdits commutateurs.

Cette électronique peut inclure un récepteur sans fils de signaux de commande. On évite ainsi le problème de la transmission galvanique de signaux de commande entre le bâti fixe et le porte-outils tournant.

Le porte-outils peut inclure des charbons pour l'alimentation en électricité des moteurs depuis l'extérieur du porte-outils.

Le porte-outils peut inclure plusieurs plateaux coaxiaux séparant les moteurs. Les moteurs peuvent être montés sur ces plateaux.

Les plateaux peuvent être séparés, ou avantageusement liés les uns aux autres de manière à former un bâti monobloc.

L'invention concerne également une machine de tournage inversé comportant :
un bâti ;
un porte-outils tel que décrit ci-dessus.

Cette machine permet ainsi de commander indépendamment la position d'un nombre d'outils important (par exemple quatre), et donc de réaliser des pièces complexes.

La machine comporte donc au moins les axes suivants : un pour l'avance de la matière (barre ou fil), un pour la rotation autour de cette barre ou fil, et un par outil, pour contrôler la position radiale de cet outil.

### Brève description des figures

Des exemples de mise en œuvre de l'invention sont indiqués dans la description illustrée par les figures annexées dans lesquelles :
- La figure 1 illustre une vue de la face avant d'un porte-outils selon un mode de réalisation de l'invention.
- La figure 2 illustre une vue en perspective d'un porte-outils selon un mode de réalisation de l'invention.
- La figure 3 illustre une vue en coupe selon l'axe B-B d'un porte-outils selon un mode de réalisation de l'invention.
- La figure 4 illustre une vue en coupe selon l'axe A-A d'un porte-outils selon un mode de réalisation de l'invention.

### Exemple(s) de mode de réalisation de l'invention

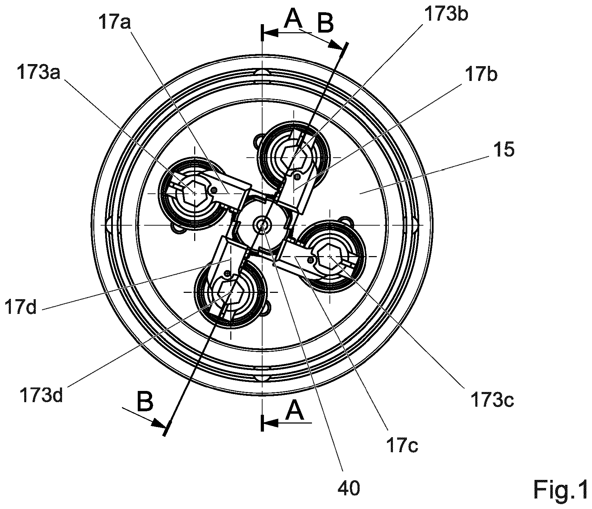

Les figures 1 à 4 illustrent une vue en perspective d'un porte-outils 1 qui peut être utilisé par exemple pour remplacer le porte-outil et les moteurs d'une décolleteuse automatique à tournage inversé conventionnelle, par exemple selon la demande WO2015124222. Ce porte-outils peut par exemple être destiné au rétrofittage d'une décolleteuse automatique de type Escomatic D2 ou similaire. Il permet d'usiner une matière, par exemple un fil métallique, typiquement enroulé sous forme d'une torche dans un dévidoir non illustré et redressée par un redresseur.

Cette construction de machine-outil est conventionnelle et ne sera donc pas davantage détaillée.

Dans la machine selon l'invention, la matière à usiner est de préférence entraînée par un dispositif d'avance de la matière commandé par un servomoteur non illustré. Ce moteur, ainsi que les autres moteurs commandant la plongée des outils et décrits plus bas, sont commandés par une boîte de commande de position d'outil non illustrée.

Le porte-outils 1 comporte un plateau 15 équipé dans cet exemple de quatre outils 17a à 17d, par exemple quatre burins, déplaçables individuellement autour des axes 173a à 173d au moyen des quatre servomoteurs 16a à 16d respectivement.

Les servomoteurs sont montés sur le porte-outils 1, et donc entraînés en rotation autour de la matière à usiner. Le fil de matière passe au travers du porte-outils (mandrin) rotatif portant dans cet exemple quatre outils, 17a-17d, perpendiculaires à l'axe longitudinal z du fil de matière et du porte-outils. La matière émerge par une ouverture 40 à l'avant d'un plateau 15 formant la face avant du porte-outils pour être usinée alternativement par les différents burins.

Chaque servomoteur 16a à 16d génère un mouvement de came virtuelle pour chaque outil. La plongée de chaque outil 17a à 17d se fait par une rotation autour d'un axe 173a à 173d respectivement. Cette rotation permet de réduire les problèmes d'équilibrage du porte-outils que pourrait provoquer un déplacement linéaire de l'outil sur le porte-outils, et qui deviendrait problématique lorsque le porte-outils tourne à grande vitesse, par exemple entre 6'000 et 10'000 tours minute. Un déplacement linéaire d'un ou plusieurs outils est cependant aussi envisageable.

Les quatre moteurs 16a à 16d sont montés coaxialement, l'un derrière l'autre, à l'arrière du plateau 15. Ils sont également montés coaxialement à l'axe longitudinal z de la matière, correspondant à l'axe de rotation du porte-outils. Chaque moteur (par exemple 16b) comporte un stator (par exemple 161b) interne, lié au bâti 30, 31 du porte-outils, et un rotor (160b) monté à l'extérieur du stator et pouvant être mis en rotation par rapport à ce stator afin de commander la plongée d'un des outils. Le stator (161b) de chaque moteur est monté sur le bâti du porte-outils et traversé par une ouverture 14 pour le passage du fil de matière.

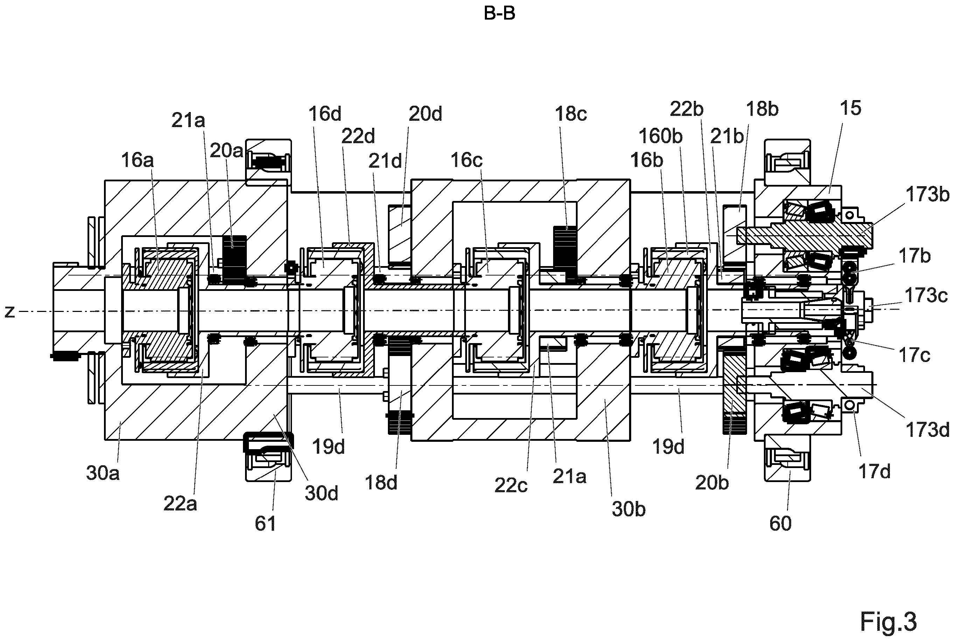

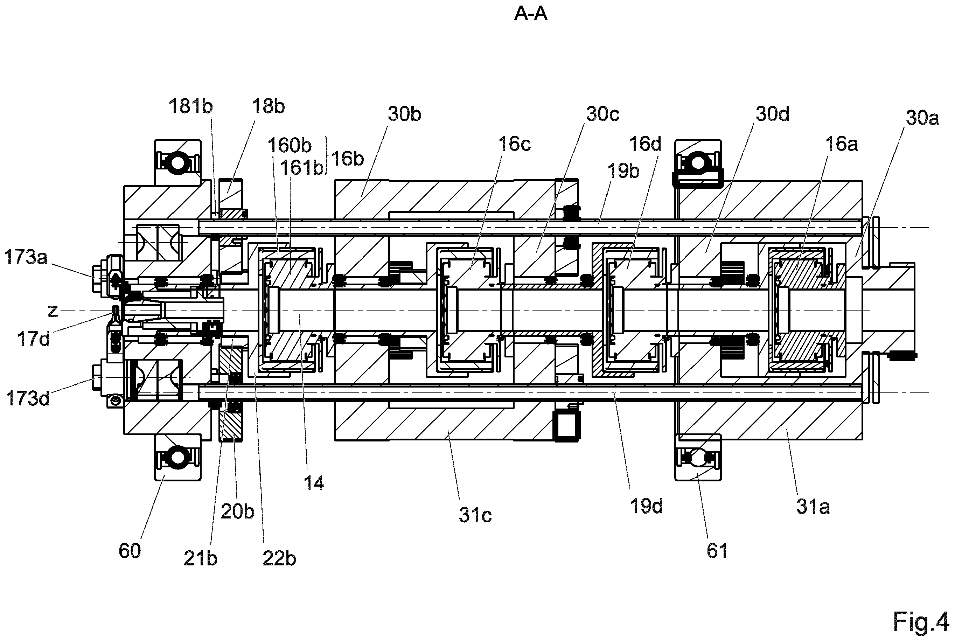

Comme on le voit en particulier sur les figures 3 et 4, le rotor 161b du moteur 16b est solidaire d'une douille 22b entraînée en rotation avec le stator. Un pignon 21b est chassé sur cette douille 22b, et engrène avec un mobile, par exemple une roue 18b entraînant l'axe 173b de l'outil correspondant 17b, par exemple via la came 181b et un doigt non illustré. La rotation du moteur 16b dans un sens de rotation entraîne la plongée de l'outil 7b, tandis que sa rotation en sens inverse permet de relever l'outil.

La construction décrite ci-dessus pour l'entrainement de l'outil 17b par le moteur 16b est reprise de manière similaire pour les autres outils 17a, 17c et 17d, entrainés par les moteurs respectifs 16a, 16c et 16d montés les uns derrière les autres. Le rotor de chaque moteur entraîne donc deux roues 18, 20 dont l'une est folle autour d'un axe alors que l'autre est montée sur un axe 19 dont l'extrémité est munie d'une came 181 (figure 4). Un doigt (non représenté) est fixé rigidement sur l'axe de l'outil 173 et appuie sur la came 181. Ainsi, lorsque la came 181 tourne, elle impute à l'axe 173 de l'outil 17 le mouvement désiré. D'autres mécanismes peuvent être prévus pour transmettre le mouvement de l'axe 19 à l'outil correspondant tout en assurant une démultiplication.

Les moteurs 16 sont de préférence des moteurs de type brushless, par exemple des moteurs couple. Ils sont donc conçus pour tourner à relativement faible vitesse en développant un couple important. On évide ainsi la présence d'un motoréducteur. Le rapport de réduction entre le pignon 21b lié au rotor du moteur et la roue 18b sur la tige 19b permet de réduire encore la vitesse de rotation de l'outil 17b, et donc d'augmenter le couple d'appui contre la matière à usiner, tout en augmentant la précision.

Le moteur peut être muni d'un codeur de position, comprenant par exemple un capteur de Hall ou un codeur optique ou inductif, afin de déterminer sa position en chaque instant et de contrôler ainsi la profondeur d'usinage. Une détermination de vitesse et/ou de position sans senseur, en analysant le courant injecté dans les différentes phases du moteur, peut aussi être mise en œuvre afin de réduire le nombre de pièces embarquées sur le porte-outils en rotation.

Comme on le voit sur la figure 4, le mobile (roue) 18 est avantageusement monté sur une tige 19b beaucoup plus longue que ce qui serait nécessaire au maintien de cette roue ; cette tige s'étend même sur la plus grande partie de la longueur du porte-outils 1. Cette disposition permet de réaliser un porte-outils avec plusieurs tiges 19a à 19d de même longueur, pour commander les divers outils 17a-17d, et donc d'équilibrer la masse des tiges 19 autour du centre de rotation.

Comme on le voit notamment sur la figure 3, le pignon 21 b entraîne également une autre roue 20n disposée à l'opposé de la roue 18b. Cette roue 20b est traversée par la tige 19d destiné à l'entraînement de l'outil 17d par le moteur 16d. La roue 20b est cependant une roue folle et peut tourner librement par rapport à cette tige 19d ; sa fonction est d'équilibrer la masse de la roue 18b en regard.

La construction décrite ci-dessus pour l'entrainement de l'outil 17b par le moteur 16b est reprise de manière similaire pour les autres outils 17a, 17c et 17d, entrainés par les moteurs respectifs 16a, 16c et 16d montés les uns derrière les autres. Le rotor de chaque moteur entraîne donc deux roues 18, 20 dont l'une est folle autour d'un axe alors que l'autre est montée sur un axe 19 dont l'extrémité est munie d'une came 181 (figure 4). Un doigt (non représenté) est fixé rigidement sur l'axe de l'outil 173 et appuie sur la came 181. Ainsi, lorsque la came 181 tourne, elle impute à l'axe 173 de l'outil 17 le mouvement désiré. D'autres mécanismes peuvent être prévus pour transmettre le mouvement de l'axe 19 à l'outil correspondant tout en assurant une démultiplication.

Le porte-outils illustré comporte quatre outils et quatre moteurs. Un nombre d'outils et de moteurs différent, par exemple un, deux, trois, cinq ou six outils et moteurs, peut être prévu.

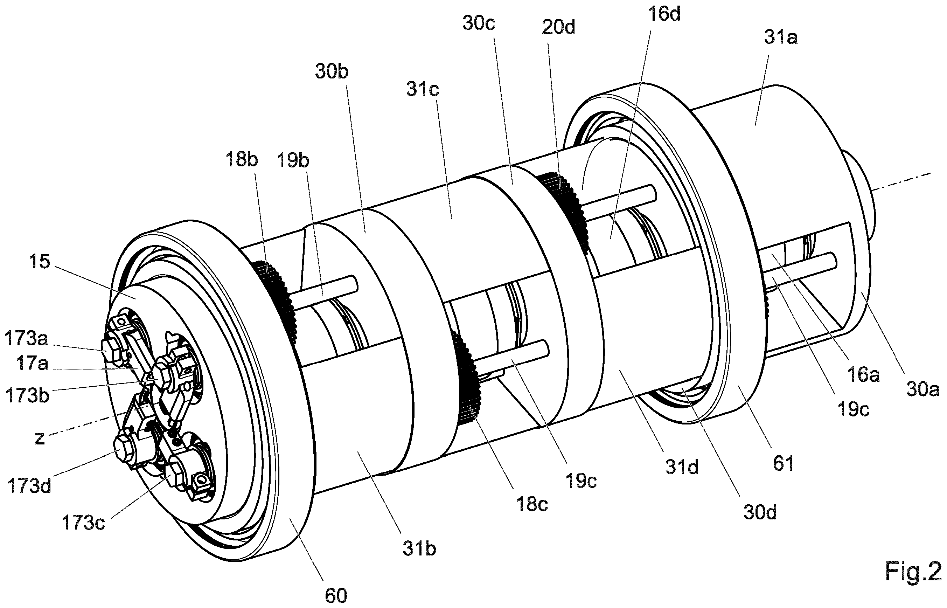

Les différents moteurs 16a à 16d sont contés sur des plateaux 30a à 30d respectivement. Ces plateaux sont avantageusement reliés entre eux et avec le plateau avant 15 par des portions de cylindres 31b, 31c, 31d et 31a, respectivement. Comme on le voit sur la figure 2, ces portions de cylindre peuvent être disposées en alternance à diverses positions autour de l'axe longitudinal z, de manière à équilibrer les masses autour de cet axe. L'ensemble des plateaux 30a à 30d et des portions de cylindre 31a à 31d peut être monobloc et par exemple réalisé en fonte afin de garantir une rigidité importante.

Le porte-outils 15 peut être mis en rotation autour de son axe longitudinal z au moyen d'un moteur non représenté, par exemple d'un servomoteur. Il est avantageusement guidé dans le bâti d'une machine au moyen d'un palier avant 60 t d'un palier à rouleaux coniques arrière 61, par exemple deux roulements à billes ou à rouleaux.

Les moteurs 16a à 16d sont alimentés en énergie depuis le bâti fixe au travers de charbons non représentés, comme dans un moteur à charbons. Dans une variante, les moteurs sont alimentés en énergie par induction, sans contact galvanique avec le bâti.

Le porte-outils 1 intègre avantageusement au moins un circuit électronique non représenté pour la commande des moteurs électriques. Ce circuit peut intégrer des commutateurs de puissance et un circuit de contrôle de ces commutateurs afin de générer les signaux d'alimentation des bobines du moteur. Le circuit électronique peut être piloté avec des signaux de commande afin de commander la position des différents outils; ces signaux peuvent être transmis depuis le bâti via des charbons, ou via une interface sans fil. Le circuit électronique est de préférence disposé de manière centrée par rapport à l'axe longitudinal z. Dans un mode de réalisation, un circuit de contrôle de moteur est prévu pour chaque moteur électrique 16.

Le circuit électronique embarqué sur le porte-outils peut aussi transmettre des signaux de mesure vers le bâti, par exemple des signaux indiquant la position angulaire des moteurs déterminée à l'aide de capteurs, au travers d'une interface sans fil ou de circuits à charbon.

## Revendications

1. Porte-outils (1) pour le tournage de matière au moyen de plusieurs outils (17a-17d) agencés pour tourner autour de la matière, ledit porte-outils intégrant plusieurs moteurs (16a-16d), lesdits moteurs comprenant chacun un rotor (160b), lesdits moteurs (16a-16d) étant munis chacun d'une ouverture longitudinale (14) destinée au passage de matière à travers les moteurs (16a-16d), **caractérisé en ce que** lesdits moteurs (16a-16d) sont agencés pour contrôler indépendamment les profondeurs de plongée respectives des outils (17a-17d).

2. Porte-outils selon la revendication 1, lesdits moteurs (16a-16d) étant coaxiaux.

3. Porte-outils selon la revendication 1 ou 2, comportant un plateau (15), lesdits moteurs (16a-16d) étant disposés d'un côté du plateau, chaque outil (17a-17d) étant monté pivotants de l'autre côté du plateau selon un axe de rotation (173a-173d) parallèle à l'axe longitudinal (z) de la matière.

4. Porte-outils selon l'une des revendications 1 à 3, chaque outil (17a-17d) étant monté pivotants selon un axe de rotation (173a-173d) parallèle à l'axe longitudinal (z) de la matière, lesdits axes de rotation des outils (173a-173d) étant répartis angulairement de manière uniforme autour dudit axe longitudinal (z).

5. Porte-outils selon la revendication 3, chaque moteur (16a-16d) étant agencé pour engrener avec un mobile (18a-18d) monté sur une tige correspondante (19a-19d) agencée pour entraîner un outil correspondant (17a-17d).

6. Porte-outils selon la revendication 5, lesdites tiges ayant tous substantiellement la même longueur.

7. Porte-outils selon l'une des revendications 4 à 6, un rapport de réduction entre le rotor de chaque moteur et l'axe de rotation d'un outil étant déterminé de manière à ce que la rotation d'un rotor d'une distance angulaire donnée provoque la rotation d'un outil d'une distance angulaire moindre.

8. Porte-outils selon la revendication 7, chaque moteur (16a-16d) étant agencé pour engrener d'une part avec un mobile (18a-18d) monté solidaire sur une tige (19a-19d) d'entraînement d'un outil (17a-17d), et d'autre part avec un mobile (20a-20d) tournant librement autour d'une tige d'entraînement d'un autre outil.

9. Porte-outils selon l'une des revendications 1 à 8, comportant une électronique de commande de chaque moteur (16a-16d) embarquée dans le porte-outils.

10. Porte-outils selon la revendication 9, ladite électronique de commande incluant des commutateurs de puissance et une électronique de contrôle desdits commutateurs.

11. Porte-outil selon l'une des revendications 1 à 10, ladite électronique de commande incluant un récepteur sans fils de signaux de commande.

12. Porte-outils selon l'une des revendications 1 à 11, incluant des charbons pour l'alimentation en électricité des moteurs depuis l'extérieur du porte-outils.

13. Porte-outils selon l'une des revendications 1 à 12, incluant plusieurs plateaux coaxiaux (30a-30d) séparant lesdits moteurs (16a-16d),
lesdits plateaux (30a-30d) étant liés les uns aux autres de manière à former un bâti monobloc.

14. Machine de tournage inversé comportant :
un bâti ;
un porte-outils (1) selon l'une des revendications 1 à 13.

## Patentansprüche

1. Ein Werkzeughalter (1) zum Drehen von Material mittels mehrerer Werkzeuge (17a-17d), die so angeordnet sind, dass sie sich um das Material drehen, wobei der Werkzeughalter mehrere Motoren (16a-16d) aufweist, wobei die Motoren jeweils einen Rotor (160b) aufweisen, wobei die Motoren (16a-16d) jeweils mit einer Längsöffnung (14) für den Durchgang von Material durch die Motoren (16a-16d) versehen sind,
**dadurch gekennzeichnet, dass** die Motoren (16a-16d) so angeordnet sind, dass sie die jeweiligen Eintauchtiefen der Werkzeuge (17a-17d) unabhängig voneinander steuern.

2. Der Werkzeughalter nach Anspruch 1, wobei die Motoren (16a-16d) koaxial angeordnet sind.

3. Der Werkzeughalter nach Anspruch 1 oder 2, weiters aufweisend eine Platte (15), wobei die Motoren (16a-16d) auf einer Seite der Platte angeordnet sind und jedes Werkzeug (17a-17d) auf der anderen Seite der Platte um eine Drehachse (173a-173d) parallel zur Längsachse (z) des Materials drehbar gelagert ist.

4. Der Werkzeughalter nach einem der Ansprüche 1 bis 3, wobei jedes Werkzeug (17a-17d) um eine Drehachse (173a-173d) parallel zur Längsachse (z) des Materials drehbar gelagert ist, wobei die Drehachsen der Werkzeuge (173a-173d) winkelig regelmäßig um die Längsachse (z) verteilt angeordnet sind.

5. Der Werkzeughalter nach Anspruch 3, wobei jeder Motor (16a-16d) so angeordnet ist, dass er mit in ein bewegliches Teil (18a-18d), das an einen korrespondierenden Schaft (19a-19d) angebracht ist, eingreift, wobei der Schaft (19a-19d) derart angeordnet ist, dass er ein korrespondierendes Werkzeug (17a-17d) antreibt.

6. Der Werkzeughalter nach Anspruch 5, wobei die Schäfte alle im Wesentlichen die gleiche Länge aufweisen.

7. Der Werkzeughalter nach einem der Ansprüche 4 bis 6, wobei ein Untersetzungsverhältnis zwischen dem Rotor jedes Motors und der Drehachse eines Werkzeugs so festgelegt ist, dass die Drehung eines Rotors um einen bestimmten Winkelabstand die Drehung eines Werkzeugs um einen geringeren Winkelabstand bewirkt.

8. Der Werkzeughalter nach Anspruch 7, wobei jeder Motor (16a-16d) so angeordnet ist, dass er einerseits in ein bewegliches Teil (18a-18d), das fest auf einem Antriebs-Schaft (19a-19d) eines Werkzeugs (17a-17d) montiert ist, und andererseits in ein bewegliches Teil (20a-20d), das sich frei um einen Antriebs-Schaft eines anderen Werkzeugs dreht, eingreift.

9. Der Werkzeugträger nach einem der Ansprüche 1 bis 8, mit einer Steuerelektronik für jeden Motor (16a-16d), die im Werkzeugträger mitgeführt wird.

10. Die Werkzeughalter nach Anspruch 9, wobei die Steuerelektronik Leistungsschalter und eine Elektronik zur Kontrolle der Schalter enthält.

11. Der Werkzeughalter nach einem der Ansprüche 1 bis 10, wobei die Steuerelektronik einen drahtlosen Empfänger für Steuersignale umfasst.

12. Der Werkzeughalter nach einem der Ansprüche 1 bis 11, aufweisend Kohlen für die Stromversorgung der Motoren von außerhalb des Werkzeughalters.

13. Der Werkzeughalter nach einem der Ansprüche 1 bis 12, der mehrere koaxiale Platten (30a-30d) aufweist, die die Motoren (16a-16d) trennen, wobei die Platten (30a-30d) so miteinander verbunden sind, dass sie einen einteiligen Rahmen bilden.

14. Drehwerkzeuge-Drehmaschine mit:
- einem Gestell;
- einem Werkzeughalter (1) nach einem der Ansprüche 1 bis 13.

## Claims

1. Tool holder (1) for the turning of material by means of several tools (17a-17d) tools (17a-17d) arranged to rotate around the material, said tool holder incorporating a plurality of motors (16a-16d), each motor in said plurality of motors comprising a rotor (160b), each said motor (16a-16d) being provided with a longitudinal opening (14) for the passage of material through the motors (16a-16d), **characterized in that**
said motors (16a-16d) are arranged to control independently the respective plunge depths of the tools (17a-17d).

2. Tool holder according to claim 1, said motors (16a-16d) being coaxial.

3. Tool holder according to claim 1 or 2, comprising a plate (15), said motors (16a-16d) being disposed on one side of the plate, each tool (17a-17d) being pivotally mounted on the other side of the plate along an axis of rotation (173a-173d) parallel to the longitudinal axis (z) of the material.

4. Tool holder according to one of the claims 1 to 3, each tool (17a-17d) being pivotally mounted along an axis of rotation (173a-173d) parallel to the longitudinal axis (z) of the material, said axes of rotation of the tools (173a-173d) being angularly distributed uniformly about said longitudinal axis (z).

5. Tool holder according to claim 3, each motor (16a-16d) being arranged to mesh with a mobile (18a-18d) mounted on a corresponding rod (19a-19d) arranged to drive a corresponding tool (17a-17d).

6. The tool holder of claim 5, said rods having all substantially the same length.

7. Tool holder according to one of the claims 4 to 6, a reduction ratio between the rotor of each motor and the axis of rotation of a tool being determined so that the rotation of a rotor by a given angular distance causes the rotation of a tool by a smaller angular distance.

8. Tool holder according to claim 7, each motor (16a-16d) being arranged to mesh on the one hand with a mobile (18a-18d) mounted integrally on a rod (19a-19d) for driving a tool (17a-17d), and on the other hand with a on a rod (19a-19d) for driving a tool (17a-17d), and on the other hand with a mobile (20a-20d) rotating freely around a drive rod of another tool.

9. Tool holder according to any one of the claims 1 to 8, comprising a command electronics of each motor (16a-16d) on board of the tool holder.

10. Tool holder according to claim 9, said command electronics including switches and a control electronics for controlling said switches.

11. A tool holder according to any one of the claims 1 to 10, said command electronics including a wireless command signals receiver.

12. Tool holder according to any one of the claims 1 to 11, including coals for supplying electricity to the motors from outside the tool holder.

13. Tool holder according to any one of claims 1 to 12, including a plurality of coaxial plates (30a-30d) separating said motors (16a-16d), said plates (30a-30d) being linked to each other so as to form a one-piece frame.

14. Reverse lathe machine comprising:
a frame;
a tool holder (1) according to any one of the claims 1 to 13.
